# EUROPÄISCHE PATENTANMELDUNG

(11) **EP 3 739 729 A1**
(43) Veröffentlichungstag der Anmeldung: **18.11.2020**
(21) Anmeldenummer: 19175142.9
(22) Anmeldetag: 17.05.2019
(51) Int. Cl.: H02K 5/22, H01R 9/26

(54) **AKTUATOR UND VERWENDUNG EINES AKTUATORS**

(71) Anmelder: Siemens Schweiz AG, 8047 Zürich (CH)
(72) Erfinder: Pally, Andreas, 6319 Allenwinden (CH)
(74) Vertreter: Maier, Daniel Oliver

(57) **Zusammenfassung**

Die Erfindung ist ein Aktuator (10) und eine Verwendung eines Aktuators (10) als Träger einer Profilschiene (16). Der Aktuator (10) umfasst in üblicher Art und Weise ein Gehäuse (14). Das Gehäuse (14) weist zumindest ein Schienenaufnahmeprofil (20) in zumindest einer Oberfläche des Gehäuses 14 auf. Das Schienenaufnahmeprofil (20) ist Aufnahme einer Profilschiene (16) bestimmt.

## Beschreibung

Die Erfindung betrifft einen Aktuator, einen Antrieb oder allgemein eine antriebstechnische Baueinheit - im Folgenden zusammenfassend als Aktuator bezeichnet - sowie eine Verwendung eines Aktuators.

Aktuatoren sind für sich genommen an sich bekannt. Ein Aktuator setzt ein elektrisches oder elektronisches Signal in eine mechanische Bewegung um und beeinflusst damit ein technisches System oder einen technischen Prozess. Aktuatoren werden auch bei der Gebäudeautomation eingesetzt. Im Kontext der hier vorgeschlagenen Neuerung beeinflusst ein Aktuator zum Beispiel eine Stellung einer Lüfter- oder Brandschutzklappe, eine Position einer Verschattungseinrichtung, eine Stellung von Rauch- oder Wärmeabzügen, eine Stellung eines Ventils für Wasser- oder Gasanwendungen, eine Stellung automatisch öffenbarer Fenster oder Oberlichter und so weiter.

Bei heutigen Aktuatoren, insbesondere in der Gebäudeautomation verwendeten Aktuatoren, ist es üblich, zusätzliche Module zum Beispiel an einem Rohr mit einer Lüfterklappe oder an nahegelegenen Wand- oder Deckenabschnitten anzubringen. Dies ist erst am Montageort, also einer jeweiligen Baustelle, möglich. Dann ist auch erst eine Verdrahtung zwischen dem Aktuator und dem oder jedem zusätzlichen Modul möglich/sinnvoll. Dies erhöht die Montagedauer und eine Suche nach eventuellen Verdrahtungsfehlern ist erst am Montageort möglich. Vermeidbar sind solche Nachteile bisher nur durch eine Integration der Funktion solcher Module in den Aktuator selbst. Dies hat Auswirkungen auf die Baugröße des Aktuators und eine Vergrößerung der Baugröße ist oftmals ungünstig und erschwert die Anbringung des Aktuators. Zudem unterbricht eine solche Funktionsintegration eine oftmals gewünschte Modularität, bei der mit einem Aktuator genau die erforderlichen Module kombiniert werden können, die auch tatsächlich notwendig sind.

Eine Aufgabe der vorliegenden Erfindung besteht darin, eine Möglichkeit zur einfachen Anbringung zusätzlicher Module in räumlicher Nähe zu dem Aktuator anzugeben.

Diese Aufgabe wird erfindungsgemäß mittels eines Aktuators, welcher in üblicher Art und Weise ein Gehäuse umfasst, dadurch gelöst, dass das Gehäuse zumindest ein Profil in zumindest einer Oberfläche des Gehäuses zur insbesondere formschlüssigen Aufnahme einer im Folgenden kurz als Profilschiene bezeichneten Standardprofilschiene aufweist. Das oder jedes Profil zur Aufnahme einer Profilschiene ist ein Standardprofilschienenaufnahmeprofil oder ein Profilschienenaufnahmeprofil.

Geräte, welche mit einer Profilschiene, zum Beispiel einer Hutschiene, verbindbar sind, sind an sich bekannt. Bekannt sind vor allem Geräte, welche an einer Profilschiene aufrastbar sind. Beispiele für solche Geräte sind Sicherungsautomaten, Schütze, Motorschutzschalter, Reihenklemmen und so weiter, aber auch komplexere Geräte wie Umrichter, speicherprogrammierbare Steuerungen und dergleichen. Solche Geräte sind dafür bestimmt, an einer Profilschiene angebracht zu werden. Diese ist dafür zuvor an einer Montageplatte eines Schaltschranks oder dergleichen angebracht worden.

Bei der hier vorgeschlagenen Neuerung sind demgegenüber die Verhältnisse umgekehrt. Hier ist es der Aktuator, der dafür bestimmt ist, eine Profilschiene aufzunehmen. Diese ist dabei nicht anderweitig fixiert und der Aktuator, genauer dessen Gehäuse, fungiert als alleiniger Träger der Profilschiene.

Davon unabhängig ist, dass der Aktuator an einer dafür vorgesehenen Montagefläche anbringbar ist und zum Betrieb an einer solchen Montagefläche angebracht wird. Dafür weist der Aktuator, genauer dessen Gehäuse, einen im Folgenden zur Unterscheidung als Montageflächengehäuseabschnitt bezeichneten Gehäuseoberflächenabschnitt auf. Als Montageflächengehäuseabschnitt fungiert zum Beispiel ein ebener Abschnitt in der Oberfläche des Aktuatorgehäuses, wenn die zur Anbringung des Aktuators bestimmte Montagefläche selbst eben oder zumindest stückweise eben ist.

Die hier vorgeschlagene Neuerung ist in ihrer allgemeinsten Form entweder dadurch gekennzeichnet, dass der Aktuator in seinem Gehäuse zusätzlich zu dem Montageflächengehäuseabschnitt zumindest ein Profil zur insbesondere formschlüssigen Aufnahme einer Profilschiene in zumindest einer Oberfläche des Gehäuses aufweist oder dass der Aktuator in seinem Gehäuse zumindest ein Profil zur insbesondere formschlüssigen Aufnahme einer Profilschiene in zumindest zwei Oberflächen des Gehäuses aufweist.

Bei der ersten Variante (Montageflächengehäuseabschnitt plus zumindest ein Profil zur Aufnahme einer Profilschiene) ist der Aktuator mittels des Montageflächengehäuseabschnitts an einem Betriebsort anbringbar und mittels des zumindest einen Profils zur Aufnahme einer Profilschiene ist zumindest eine Profilschiene am Aktuator, nämlich an dessen Gehäuse, anbringbar. Der Montageflächengehäuseabschnitt kann zum Beispiel ein ebener Oberflächenabschnitt des Gehäuses sein, aber genauso ein übliches Rastprofil zum Aufrasten an einer Profilschiene umfassen. Bekannte elektrische Geräte wie zum Beispiel Schütze, Motorschutzschalter und dergleichen weisen genau ein Rastprofil zum Aufrasten an einer Profilschiene - also im weitesten Sinne einen Montageflächengehäuseabschnitt - auf, aber keinen Montageflächengehäuseabschnitt und zusätzlich zu dem Montageflächengehäuseabschnitt zumindest ein Profil oder zumindest ein weiteres Profil zur Aufnahme einer Profilschiene.

Bei der zweiten Variante (zumindest ein Profil zur Aufnahme einer Profilschiene in unterschiedlichen Gehäuseoberflächen) ist der Aktuator mittels eines der zumindest zwei Profile an einem Betriebsort an einer dortigen Profilschiene anbringbar und mittels des zumindest einen weiteren Profils ist eine Profilschiene am Aktuator, nämlich an dessen Gehäuse, anbringbar. Dasjenige Profil, mit dem der Aktuator am Betriebsort an einer dortigen Profilschiene anbringbar ist, ist im weitesten Sinne ein Montageflächengehäuseabschnitt. Bekannte elektrische Geräte wie zum Beispiel Schütze, Motorschutzschalter und dergleichen weisen genau einen solchen Montageflächengehäuseabschnitt auf, aber keinen Montageflächengehäuseabschnitt und zusätzlich zu dem Montageflächengehäuseabschnitt zumindest ein weiteres Profil zur Aufnahme einer Profilschiene.

Die beiden Varianten gemeinsame Eigenschaft und das verbindende technische Merkmal ist zumindest ein Profil zur insbesondere formschlüssigen Aufnahme einer Profilschiene, wobei der Aktuator alleiniger Träger einer an diesem Profil angebrachten Profilschiene ist. Bei beiden Varianten ist mittels der zumindest einen am Aktuatorgehäuse anbringbaren Profilschiene oder mittels der zumindest einen zusätzlich am Aktuatorgehäuse anbringbaren Profilschiene ein Anbringen von zusätzlichen Geräten, Bauteilen, Modulen und dergleichen in räumlicher Nähe zu dem Aktuator möglich.

Vorteilhafte Ausgestaltungen der hier vorgeschlagenen Neuerung sind Gegenstand der Unteransprüche. Dabei verwendete Rückbeziehungen innerhalb der Ansprüche weisen auf die weitere Ausbildung des Gegenstandes des in Bezug genommenen Anspruchs durch die Merkmale des jeweiligen abhängigen Anspruchs hin. Sie sind nicht als ein Verzicht auf die Erzielung eines selbständigen, gegenständlichen Schutzes für die Merkmale oder Merkmalskombinationen eines abhängigen Anspruchs zu verstehen. Des Weiteren ist im Hinblick auf eine Auslegung der Ansprüche sowie der Beschreibung bei einer näheren Konkretisierung eines Merkmals in einem abhängigen Anspruch davon auszugehen, dass eine derartige Beschränkung in den jeweils vorangehenden Ansprüchen sowie einer allgemeineren Ausführungsform der gegenständlichen Vorrichtung nicht vorhanden ist. Jede Bezugnahme in der Beschreibung auf Aspekte abhängiger Ansprüche ist demnach auch ohne speziellen Hinweis ausdrücklich als Beschreibung optionaler Merkmale zu lesen.

Bei einer Ausführungsform der hier vorgeschlagenen Neuerung weist der Aktuator in seinem Gehäuse zumindest ein Profil zur insbesondere formschlüssigen Aufnahme einer Profilschiene entweder in einer ersten Raumrichtung oder alternativ in einer zweiten Raumrichtung auf. Diese Möglichkeit einer Orientierung einer am Aktuator angebrachten Profilschiene in unterschiedliche Raumrichtungen erhöht die Flexibilität beim Anbringen zusätzlicher Module in räumlicher Nähe zu dem Aktuator erheblich.

Optional ist das zumindest eine Profil zur alternativen Aufnahme einer Profilschiene in zumindest zwei Raumrichtungen ein Profil, welches die Profilschiene in jeder Raumrichtung in derselben Ebene aufnimmt. Der Abstand einer am Aktuator angebrachten Profilschiene bleibt damit unabhängig von der gewählten Raumrichtung immer gleich. Des Weiteren kann zum Beispiel ein Oberflächenabschnitt des Aktuatorgehäuses als Anlagefläche für eine mittels des Profils am Aktuator angebrachte Profilschiene dienen.

Optional weist der Aktuator in seinem Gehäuse jeweils zumindest ein Profil zur insbesondere formschlüssigen Aufnahme einer Profilschiene auf mehreren Seitenflächen auf. Profile auf mehreren Seitenflächen erlauben die gleichzeitige oder alternative Verwendung mehrerer Profile.

Bei einer besonderen Ausführungsform weist der Aktuator in seinem Gehäuse umlaufend auf aneinander angrenzenden Seitenflächen jeweils zumindest ein Profil zur insbesondere formschlüssigen Aufnahme einer Profilschiene auf. Dann umfasst das Aktuatorgehäuse zumindest vier Profile, nämlich jeweils zumindest ein Profil auf oder in der Frontseite, der anschließenden Seitenfläche, der daran anschließenden Rückseite und der wiederum daran anschließenden (anderen) Seitenfläche. Je nach den Platzverhältnissen am Anbringungs-/Betriebsort des Aktuators kann eines der Profile zum Anbringen einer Profilschiene ausgewählt werden und soweit notwendig kann an mehr als einem Profil eine Profilschiene angebracht werden.

Vorteilhaft, aber grundsätzlich optional, weist das oder jedes Profil zumindest zwei einander zugewandte und als Haken (starre Haken oder federnde Haken) fungierende Profilrandelemente auf. Durch die Hakenform ist eine sichere und belastbare Anbringung einer Profilschiene am Aktuator möglich. Mittels zumindest zweier einander zugewandter Haken kann eine Profilschiene beidseitig eingefasst werden.

Bei einer speziellen Ausführungsform weist jeder Haken zumindest einen Hinterschnitt auf und innerhalb eines Profils ist ein Haken einem anderen Haken zugewandt, indem dessen Hinterschnitt in Richtung auf den anderen Haken offen ist. Der Hinterschnitt in jedem Haken fungiert als Aufnahme, insbesondere als formschlüssige Aufnahme, für einen Abschnitt einer am Aktuator anzubringenden Profilschiene und zusammen mit dem Hinterschnitt in dem jeweils anderen Haken ergibt sich eine sichere Halterung der Profilschiene. Der Abstand der Haken und damit der Abstand der Hinterschnitte in den Haken ist dabei auf die Breite der Profilschiene abgestellt.

Insgesamt ist die hier vorgeschlagene Neuerung auch die Verwendung eines Aktuators der hier und im Folgenden beschriebenen Art als alleiniger Träger einer Profilschiene und als Mittel zur Anbringung zumindest eines weiteren Moduls in räumlicher Nähe zu dem Aktuator.

Die Anordnung von zusätzlichen Bauteilen, Geräten, Zusatzmodulen oder externen Boxen in räumlicher Nähe zu einem Aktuator mittels einer an dem Aktuator angebrachten Profilschiene bietet eine flexible Lösung sowohl in der Vorinstallation als auch auf der Baustelle. Die im hier und im Folgenden einzeln oder zusammen als Modul bzw. Module bezeichneten Bauteile, Geräte, Zusatzmodule, Interfaces, Schnittstellen, externe Boxen oder dergleichen können in einer gewünschten Richtung angeordnet werden und somit kann den Platzverhältnissen am Anbringungsort optimal Rechnung getragen werden. Der Aktuator kann bereits ab Werk, aber jedenfalls vor einer Montage an einem jeweiligen Betriebsort, mit dem oder jedem weiteren Modul vorverkabelt werden und die oder jede resultierende elektrisch leitende Verbindung kann ab Werk oder vor einer Montage an einem jeweiligen Betriebsort geprüft werden. Am Betriebsort kann die Position oder Anordnung eines Moduls noch flexibel angepasst werden, ohne dass dafür die Verkabelung entfernt werden muss. Wird erst auf der Baustelle erkannt, dass eine zuvor vorgesehene Anordnung eines Moduls oder mehrerer Module ungünstig oder nicht optimal ist, wird die Profilschiene entweder zusammen mit dem oder jedem vorverkabelten Modul umgesteckt oder die Profilschiene wird umgesteckt und das oder jedes vorverkabelte Modul wird wieder an der Profilschiene angebracht. Der Aktuator, genauer das Gehäuse des Aktuators, bleibt immer der Träger der Profilschiene oder mehrerer Profilschienen und damit kann die oben beschriebene Flexibilität unabhängig von der Situation am jeweiligen Betriebsort gewährleistet werden, weil zum Beispiel keine Abhängigkeit von verfügbaren Wandflächen oder dergleichen besteht. Die Verwendbarkeit von Profilschienen in Form von Standardprofilschienen erlaubt einen Rückgriff auf ein bewährtes System zum Anbringen eines Moduls an einer Profilschiene und eine Verwendbarkeit bereits bestehender Teile.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung durchaus auch Ergänzungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten oder Verfahrensschrittfolgen führen.

Es zeigen
- FIG 1: einen Antrieb (Aktuator) für eine Lüfterklappe mit einer am Aktuator angebrachten Hutschiene,
- FIG 2: bis
- FIG 5: unterschiedliche Ansichten des Aktuators aus FIG 1,
- FIG 6: den Aktuator aus FIG 1 mit der am Aktuator angebrachten Hutschiene in einer an einem Rohr mit einer Lüfterklappe angebrachten Konfiguration, wobei an der Hutschiene in räumlicher Nähe zu dem Aktuator zusätzliche Module angebracht sind,
- FIG 7: das Rohr aus FIG 6 mit einer zur Anbringung des Aktuators bestimmten Montagefläche und
- FIG 8: ein anderes Lüftungselement mit einer zur Anbringung des Aktuators bestimmten Montagefläche.

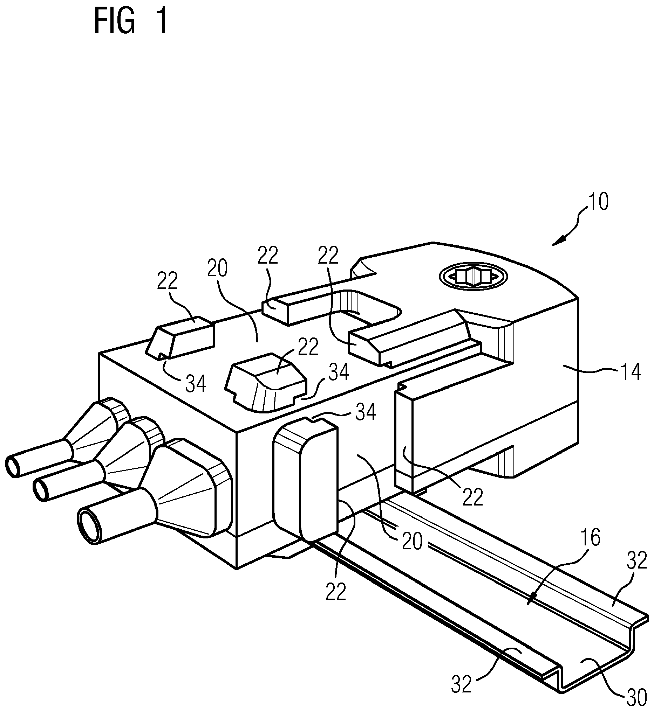

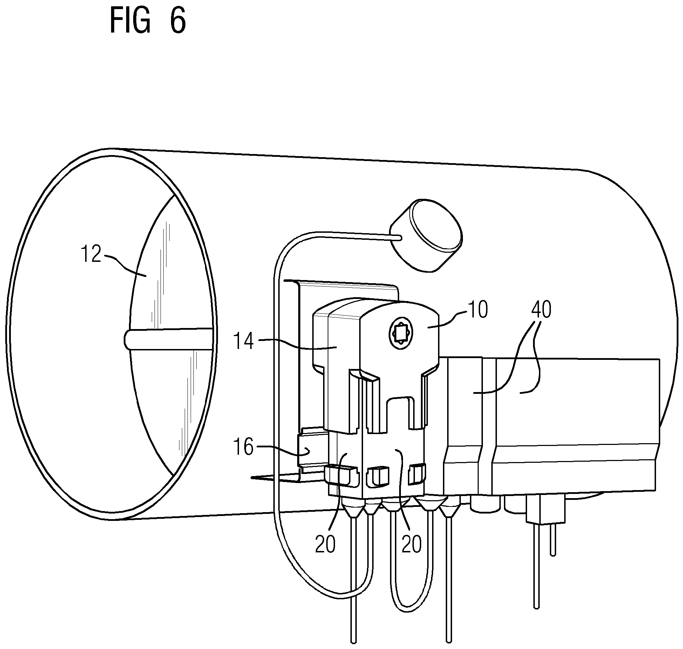

Die Darstellung in FIG 1 zeigt als Beispiel für einen Aktuator 10 der hier im Vordergrund stehenden Art eine als Antrieb für eine Lüfterklappe 12 (FIG 6, FIG 7, FIG 8) oder dergleichen fungierende Vorrichtung. Mit dem Aktuator 10, genauer mit einem Gehäuse 14 des Aktuators 10, ist lösbar eine Profilschiene 16, insbesondere eine Standardprofilschiene 16, verbindbar/kombinierbar. Bei der gezeigten Situation ist die Profilschiene 16 lösbar mit dem Aktuatorgehäuse 14 verbunden/kombiniert. Als Profilschiene 16 ist beispielhaft eine sogenannte Hutschiene 16 gezeigt. Grundsätzlich sind Profilschienen 16 mit einem beliebigen Profil verwendbar, zum Beispiel Profilschienen 16 mit einem sogenannten G-Profil oder einem C-Profil.

Profilschienen 16 sind an sich bekannt. Grundsätzlich kommen alle bekannten Formen von Profilschienen 16 für die hier vorgeschlagene Neuerung in Frage. Andere in der Fachterminologie geläufige Bezeichnungen für eine Profilschiene 16 lauten Tragschiene oder Montageschiene. Hier und im Folgenden wird im Interesse einer besseren Lesbarkeit der Beschreibung der Begriff Profilschiene 16 verwendet. Dabei sind jeweils auch die Begriffe Tragschiene und Montageschiene mitzulesen. Die Begriffe Profilschiene 16 sowie Tragschiene oder Montageschiene bezeichnen dasselbe. Eine Profilschiene 16 ist in grundsätzlich an sich bekannter Art und Weise zur Befestigung von elektrischen oder elektronischen Modulen an der Profilschiene 16, nämlich an dem Profil der Profilschiene 16, bestimmt.

Zum Anbringen einer Profilschiene 16 am Aktuator 10 (am Aktuatorgehäuse 14) ist ein im Folgenden als Profilschienenaufnahmeprofil 20 oder kurz als Schienenaufnahmeprofil 20 bezeichnetes Profil in der Oberfläche des Aktuatorgehäuses 14 bestimmt. Das Aktuatorgehäuse 14 weist zumindest ein solches Profil 20 mit zumindest zwei im Folgenden kurz als Haken 22 bezeichneten Profilrandelementen auf, indem dieses bzw. diese zum Beispiel in das Gehäuse 14 (in die Gehäuseoberfläche) eingeformt ist bzw. sind, insbesondere einstückig in die Gehäuseoberfläche eingeformt ist bzw. sind.

Zum Anbringen des Aktuators 10 in einer zum Beispiel zum Drehen einer Lüfterklappe 12 geeigneten Art und Weise an einer Montagefläche 24 (FIG 6, FIG 7, FIG 8) weist das Aktuatorgehäuse 14 in an sich bekannter Art und Weise einen Gehäuseoberflächenabschnitt auf, der im Folgenden zur Unterscheidung als Montageflächengehäuseabschnitt 26 bezeichnet wird. Über die Montagefläche 24 ragt zum Beispiel eine Achse einer Lüfterklappe 12 hinaus und diese Achse wird beim Anbringen des Aktuators 10 an der Montagefläche 24 durch das Gehäuse 14 des Aktuators 10 hindurchgeführt oder in das Gehäuse 14 des Aktuators 10 eingeführt. Die Achse der Lüfterklappe 12 ist mittels des Aktuators 10 drehbar und entsprechend ist eine Stellung der Lüfterklappe 12 mittels des Aktuators 10 beeinflussbar. Im an der Montagefläche 24 angebrachten Zustand liegt der Aktuator 10 mit dem Montageflächengehäuseabschnitt 26 des Aktuatorgehäuses 10 an der Montagefläche 24 an. Der Montageflächengehäuseabschnitt 26 ist bei der gezeigten Ausführungsform in grundsätzlich optionaler Art und Weise unabhängig von jedem Schienenaufnahmeprofil 20, d.h. es gibt keine räumlichen Überschneidungen zwischen dem Montageflächengehäuseabschnitt 26 und einem Schienenaufnahmeprofil 20 und der Montageflächengehäuseabschnitt 26 ist von jedem Schienenaufnahmeprofil 20 beabstandet.

Das Schienenaufnahmeprofil 20 ist auf das jeweilige Profil der aufzunehmenden Profilschiene 16 abgestellt. Für den Fall einer Profilschiene 16 in Form einer Hutschiene 16 wird dies nachfolgend beispielhaft erläutert: Das Hutprofil einer Hutschiene 16 umfasst bekanntlich einen ebenen Mittelabschnitt 30 und zwei seitliche Fahnen 32 in einer von der Ebene des Mittelabschnitts 30 beabstandeten und zu der Ebene des Mittelabschnitts 30 parallelen Ebene. Ein zur Aufnahme einer Hutschiene 16 bestimmtes Schienenaufnahmeprofil 20 umfasst als Profilrandelemente zumindest zwei einander zugewandte Haken 22 (Haken 22 mit einander zugewandten starren oder federnden Nasen). Als Öffnung des oder jedes Hakens 22 - im Folgenden selbst kurz als Haken 22 bezeichnet - fungiert dabei ein Hinterschnitt 34 (in den Figuren nur einzelne bezeichnet) in einem sich auf einem ansonsten ebenen Oberflächenabschnitt des Gehäuses 14 erhebenden Profilrandelement (das Profilrandelement ist eine Erhebung auf dem ansonsten ebenen Oberflächenabschnitt des Gehäuses 14 und umfasst den Haken 22/den Hinterschnitt 34).

Der Abstand der einander zugewandten Haken 22 entspricht der Breite einer Hutschiene 16 (oder allgemein der Breite einer Profilschiene 16) und jeder Haken 22 ist zur Aufnahme jeweils einer der beiden seitlichen Fahnen 32 der Hutschiene 16 bestimmt. Die Hutschiene 16 wird mit dem Schienenaufnahmeprofil 20 verbunden (am Schienenaufnahmeprofil 20 angebracht), indem die seitlichen Fahnen 32 der Hutschiene 16 in oder unter die einander zugewandten Haken 22 geschoben werden (in die einander zugewandten Hinterschnitte 34). Das Anbringen der Hutschiene 16 oder jeder anderen Profilschiene 16 am Schienenaufnahmeprofil 20 erfolgt bei starren Haken 22 (Haken mit starren Nasen) durch eine translatorische Relativbewegung von Hutschiene 16 (Profilschiene 16) und Aktuator 10. Bei federnden Haken 22 (Haken mit federnden und oder elastisch beweglichen Nasen) kann das Anbringen der Hutschiene 16 oder jeder anderen Profilschiene 16 am Schienenaufnahmeprofil 20 ebenfalls durch eine translatorische Relativbewegung von Hutschiene 16 (Profilschiene 16) und Aktuator 10 erfolgen. Zusätzlich ist bei federnden Haken 22 auch ein Aufrasten der Hutschiene 16 (Profilschiene 16) am Aktuator 10 möglich.

In der Darstellung in FIG 1 sind bei der gewählten Perspektive zwei Oberflächen (Frontseite, rechte Seitenfläche) des Aktuatorgehäuses 14 mit Schienenaufnahmeprofilen 20 sichtbar. Tatsächlich umfasst das beispielhaft gezeigte Aktuatorgehäuse 14 in grundsätzlich optionaler Art und Weise vier Oberflächen mit Schienenaufnahmeprofilen 20, nämlich auch Schienenaufnahmeprofile 20 in den nicht sichtbaren Oberflächen (Rückseite, linke Seitenfläche). Die Schienenaufnahmeprofile 20 in der Frontseite und in der Rückseite einerseits sowie die Schienenaufnahmeprofile 20 in der linken Seitenfläche und der rechten Seitenfläche andererseits sind bei der gezeigten Ausführungsform gleich. Dies ist optional. Grundsätzlich können alle Schienenaufnahmeprofile 20 gleich oder zwei oder drei Schienenaufnahmeprofile 20, insbesondere jeweils zwei Schienenaufnahmeprofile 20, zum Beispiel zwei Schienenaufnahmeprofile 20 in einander gegenüberliegenden Oberflächen, gleich sein. Genauso können alle Schienenaufnahmeprofile 20 unterschiedlich sein, zum Beispiel zum Zwecke einer Aufnahmemöglichkeit für Profilschienen 16 mit unterschiedlichen Profilen.

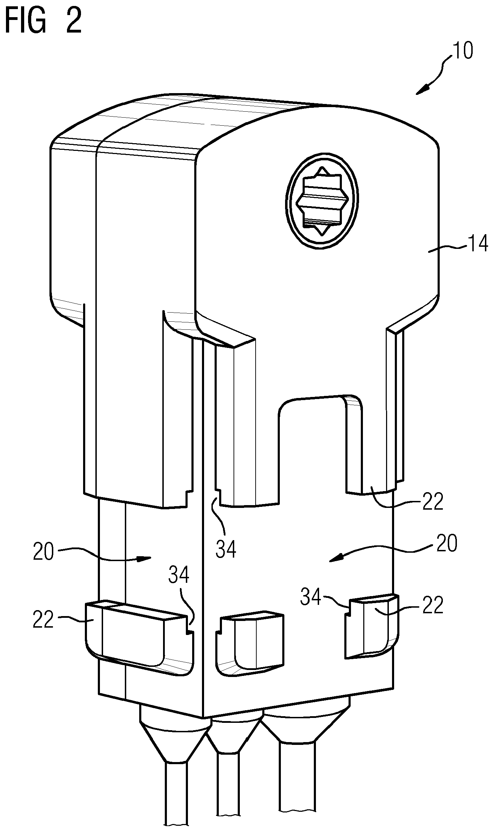

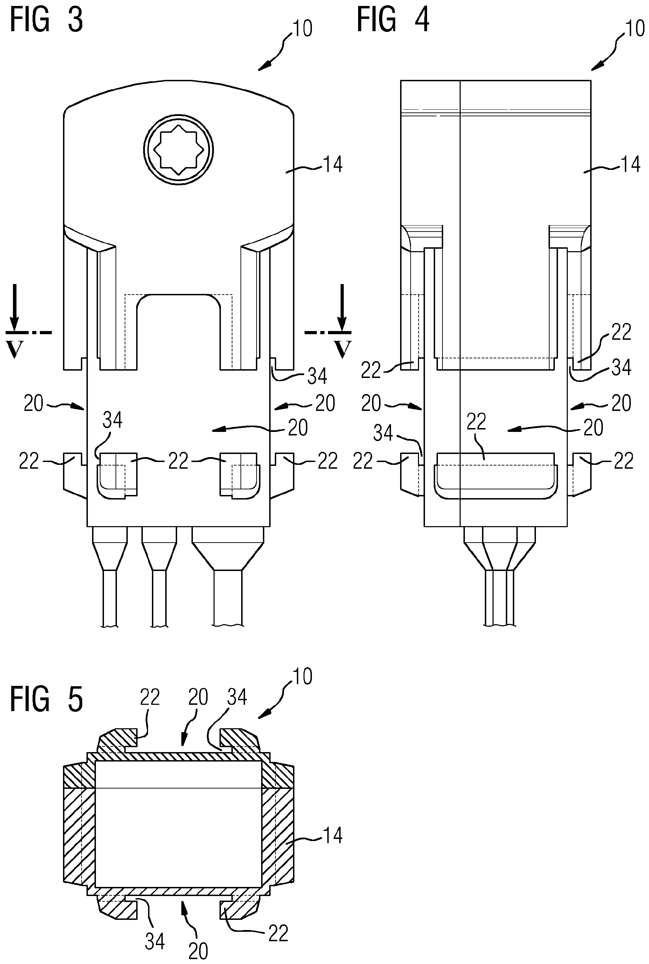

Die Darstellung in FIG 2 zeigt das Gehäuse 14 des Aktuators 10 in FIG 1 in einer isometrischen Darstellung. Die bei der für die Darstellung gewählten Orientierung und Perspektive sichtbaren Oberflächen des Aktuatorgehäuses 14 sind die Frontseite und eine Seitenfläche (linke Seitenfläche). In diesen Oberflächen sind deren jeweilige Schienenaufnahmeprofile 20 und deren Haken 22 erkennbar. Die Darstellung in FIG 3 zeigt das Gehäuse 14 des Aktuators 10 in FIG 2 in einer Draufsicht. Hier ist das Schienenaufnahmeprofil 20 in der Frontseite erkennbar. Des Weiteren sind die Haken 22 der Schienenaufnahmeprofile 20 in der linken und rechten Seitenfläche erkennbar. Die Darstellung in FIG 4 zeigt eine Seitenfläche des Gehäuses 14 des Aktuators 10 in FIG 2. Hier ist das Schienenaufnahmeprofil 20 in der rechten Seitenfläche erkennbar. Des Weiteren sind die Haken 22 der Schienenaufnahmeprofile 20 in der Front- und Rückseite erkennbar. Die Darstellung in FIG 5 zeigt einen Schnitt durch das Gehäuse 14 des Aktuators 10 in FIG 2 entlang der in FIG 3 gezeigten Schnittlinie (V-V). In den Darstellungen in FIG 2 bis FIG 5 sind im Interesse einer besseren Übersichtlichkeit mitunter nur einzelne Haken 22 und nur einzelne Hinterschnitte 34 mit den entsprechenden Bezugsziffern bezeichnet.

Im Folgenden wird das Schienenaufnahmeprofil 20 in der Frontseite näher betrachtet: Dort umfasst das Schienenaufnahmeprofil 20 vier jeweils als Haken (Profilrandelemente) 22 fungierende Erhebungen auf der ansonsten ebenen Oberfläche. Die Bezeichnung der Position der Haken 22 mit "links", "rechts", "unten" und "oben" bezieht sich auf die in FIG 2 und FIG 3 gezeigte Orientierung. Bei einer konkreten Einbaulage, die von dieser gezeigten Orientierung abweicht, ergeben sich entsprechende andere Positionen der Haken 22. Dies ist bei einer Interpretation der hier vorgelegten Beschreibung jeweils zu berücksichtigen.

Zwei Haken 22 (links unten und rechts unten) erheben sich einzeln auf der ansonsten ebenen Gehäuseoberfläche. Zwei weitere Haken 22 (rechts oben, links oben) gehen in einen größer dimensionierten Gehäuseabschnitt über, wobei dies bei der gezeigten Ausführungsform im Wesentlichen einer gefälligen optischen Anmutung des Gehäuses 14 geschuldet ist und anstelle solcher Haken 22 auch einzelne Haken 22 wie links unten und rechts unten möglich sind. Der Übergang in den größer dimensionierten Gehäuseabschnitt ist für die Aufnahme einer Profilschiene 16 ohne Belang und damit optional. Auf den Übergang wird hier nur hingewiesen, damit alle im Rahmen der hier vorgelegten Beschreibung als Haken 22 bezeichneten Erhebungen auf der Gehäuseoberfläche leicht identifizierbar sind.

Jeder Haken 22 des Schienenaufnahmeprofils 20 auf der Frontseite ist mit seinem Hinterschnitt 34 genau zwei weiteren Haken 22 zugewandt. Der Haken 22 links unten ist einerseits dem Haken 22 rechts unten und andererseits dem Haken 22 links oben zugewandt. Soweit der Haken 22 links unten dem Haken 22 rechts unten zugewandt ist, weist er einen in Richtung auf den Haken 22 rechts unten offenen Hinterschnitt 34 auf. Soweit der Haken 22 links unten dem Haken 22 links oben zugewandt ist, weist er einen in Richtung auf den Haken 22 links oben offenen Hinterschnitt 34 auf. Für alle anderen Haken 22 auf der Frontseite gilt dasselbe entsprechend. Der Hinterschnitt 34 macht die Erhebung auf der Oberfläche des Aktuatorgehäuses 14 zu einem hakenförmigen Halteelement mit einer Nase oberhalb des Hinterschnitts 34 und deshalb wird hier der Begriff Haken 22 verwendet. Der Hinterschnitt 34 eines Hakens 22 nimmt einen Abschnitt der Profilschiene 16 auf (zum Beispiel eine seitliche Fahne 32 einer Hutschiene 16) und der Hinterschnitt 34 des gegenüberliegenden Hakens 22 nimmt einen anderen Abschnitt derselben Profilschiene 16 auf (zum Beispiel die andere seitliche Fahne 32 der Hutschiene 16). Die von den beiden einander zugewandten Haken 22 und den dortigen Hinterschnitten 34 aufgenommenen Abschnitte der Profilschiene 16 liegen einander quer zur Längsachse der Profilschiene 16 oder zumindest im Wesentlichen quer zur Längsachse der Profilschiene 16 gegenüber.

Die Aufnahme in dem Hinterschnitt 34 oder durch den Hinterschnitt 34 ist bevorzugt zumindest einseitig, insbesondere beidseitig eine formschlüssige Aufnahme. Indem eine Profilschiene 16 von den Hinterschnitten 34 zumindest zweier gegenüberliegender Haken 22 aufgenommen ist, ist die Profilschiene 16 am Schienenaufnahmeprofil 20 angebracht und dort an den Haken 22 eingehakt.

Das Schienenaufnahmeprofil 20 in der Frontseite umfasst jeweils zwei paarig einander zugewandte Haken 22. Ein erstes Haken-Paar ist der Haken 22 links unten und der Haken 22 links oben. Ein zweites Haken-Paar ist der Haken 22 rechts unten und der Haken 22 rechts oben. Diese beiden auf der Oberfläche der Frontseite des Gehäuses 14 voneinander beabstandeten Haken-Paare sind dafür bestimmt, zusammen eine an dem Schienenaufnahmeprofil 20 angebrachte Profilschiene 16 zu tragen. Die beiden Haken-Paare und deren Abstand voneinander gewährleisten eine ausreichende Unterstützung einer am Schienenaufnahmeprofil 20 angebrachten und dabei seitlich über das Aktuatorgehäuse 14 hinausragenden Profilschiene 16. Eine in dieser Weise mit dem Schienenaufnahmeprofil 20 in der Frontseite (oder der Rückseite) des Aktuatorgehäuses 14 verbundene Profilschiene 16 ist bei der in FIG 2 und FIG 3 gezeigten Orientierung des Aktuatorgehäuses 14 horizontal ausgerichtet. Der insoweit wirksame Abstand der Haken-Paare voneinander entspricht in etwa der Breite des Aktuatorgehäuses 14 im Bereich des Schienenaufnahmeprofils 20.

Beim Verbinden einer Profilschiene 16 in dieser Ausrichtung (horizontale Ausrichtung) mit dem Schienenaufnahmeprofil 20 in der Frontseite (oder der Rückseite) wird die Profilschiene 16 zunächst zum Beispiel unter die beiden linken Haken 22 (Haken links unten, Haken links oben) geschoben und dann weitergeschoben, bis die Profilschiene 16 schließlich mit den beiden rechten Haken 22 (Haken rechts unten, Haken rechts oben) in Kontakt kommt und dann durch Weiterschieben auch unter diese Haken 22 geschoben wird. Bei einem Anbringen der Profilschiene 16 in horizontaler Ausrichtung "von der anderen Seite" gilt dasselbe entsprechend. Dann wird die Profilschiene 16 zunächst unter die rechten Haken 22 und anschließend unter die linken Haken 22 geschoben.

Das Schienenaufnahmeprofil 20 in den Seitenflächen umfasst genau zwei einander zugewandte Haken 22, wobei einer der beiden Haken 22 (unterer Haken 22) durch eine einzelne Erhebung auf der ansonsten ebenen Oberfläche der Seitenfläche gebildet ist und der andere Haken 22 (oberer Haken 22) - wie dies oben für die entsprechenden Haken 22 auf der Frontseite beschrieben wurde - in einen größer dimensionierten Gehäuseabschnitt übergeht. Die beiden Haken 22 dieses Schienenaufnahmeprofils 20 sind einander zugewandt, weil in jedem Haken 22 dessen Hinterschnitt 34 in Richtung auf den jeweils anderen Haken 22 weist und in Richtung auf den jeweils anderen Haken 22 offen ist. Zwischen die beiden einander zugewandten Haken 22 des Schienenaufnahmeprofils 20 in der Seitenfläche und in deren Hinterschnitte 34 kann eine Profilschiene 16 geschoben werden und diese ist bei der in FIG 2 und FIG 3 gezeigten Orientierung des Aktuatorgehäuses 14 horizontal ausgerichtet (in Bezug auf die Orientierung in FIG 3 normal zur Blattebene). Eine ausreichende Unterstützung einer an diesem Schienenaufnahmeprofil 20 angebrachten und dabei seitlich über das Aktuatorgehäuse 14 hinausragenden Profilschiene 16 ist dabei dadurch gewährleistet, dass die Haken 22 entlang der Längserstreckung einer am Schienenaufnahmeprofil 20 angebrachten Profilschiene 16 länger sind als die einzelnen Haken 22 auf der Frontseite. Die insoweit wirksame Länge der Haken 22 entspricht in etwa der Breite des Aktuatorgehäuses 14 im Bereich des Schienenaufnahmeprofils 20 in der Seitenfläche.

Neben diesen Möglichkeiten zur Anbringung einer Profilschiene 16 an einem Schienenaufnahmeprofil 20 in einer horizontalen Ausrichtung besteht im Schienenaufnahmeprofil 20 auf der Frontseite (oder der Rückseite) auch noch eine Möglichkeit zur Anbringung einer Profilschiene 16 in einer vertikalen Ausrichtung. Dafür sind die paarig einander zugewandten Haken 22 voneinander beabstandet. Der Abstand zwischen den beiden unteren Haken 22 und der Abstand (derselbe Abstand) zwischen den beiden oberen Haken 22 erlaubt - genauso wie der Abstand zwischen den beiden linken Haken 22 und der Abstand (derselbe Abstand) zwischen den beiden rechten Haken 22 - das Einführen einer Profilschiene 16 zwischen diese Haken 22. Beim Verbinden einer Profilschiene 16 in dieser Ausrichtung (vertikale Ausrichtung) mit dem Schienenaufnahmeprofil 20 in der Frontseite wird die Profilschiene 16 zunächst unter die beiden unteren Haken 22 (Haken links unten, Haken rechts unten) geschoben und dann weitergeschoben, bis die Profilschiene 16 schließlich mit den beiden oberen Haken 22 (Haken links oben, Haken rechts oben) in Kontakt kommt und dann durch Weiterschieben auch unter diese Haken 22 geschoben wird.

Bei einer Ausführungsform des Schienenaufnahmeprofils 20, welches alternativ eine Anbringung einer Profilschiene 16 in einer ersten Raumrichtung, also zum Beispiel in einer horizontalen Ausrichtung, oder einer zweiten Raumrichtung, also zum Beispiel einer vertikalen Ausrichtung, erlaubt - wie dies bei dem beispielhaft gezeigten Aktuatorgehäuse 14 bezüglich des dortigen Schienenaufnahmeprofils 20 auf der Front- oder Rückseite der Fall ist -, sind die Position der Haken 22 und der Abstand der jeweils einander zugewandten Hanken 22 durch die Breite der aufzunehmenden Profilschiene 16 bestimmt: Die oberen Haken 22 (Haken links oben, Haken rechts oben) sind von den unteren Haken 22 (Haken links unten, Haken rechts unten) genau so weit entfernt, dass mittels dieser Haken 22 eine Halterung einer Profilschiene 16 in einer horizontalen Ausrichtung möglich ist. Genauso sind die linken Haken 22 (Haken links unten, Haken links oben) von den rechten Haken 22 (Haken rechts unten, Haken rechts oben) genau so weit entfernt, dass mittels dieser Haken 22 eine Halterung einer Profilschiene 16 in einer vertikalen Ausrichtung möglich ist.

Gegenstand der hier vorgeschlagenen Neuerung ist auch ein (nicht gezeigtes) Schienenaufnahmeprofil 20 in zumindest einer Oberfläche des Aktuatorgehäuses 14, welches zur Aufnahme einer Profilschiene 16 mit einem ersten Profil in einer ersten Raumrichtung und zur Aufnahme einer Profilschiene 16 mit einem unterschiedlichen zweiten Profil in einer zweiten Raumrichtung bestimmt ist.

Bei einer Ausführungsform des Schienenaufnahmeprofils 20, welches alternativ eine Anbringung einer Profilschiene 16 in einer horizontalen Ausrichtung oder einer vertikalen Ausrichtung erlaubt, besteht die Besonderheit darin, dass jeder einzelne Haken 22 Hinterschnitte 34 aufweist, welche in zwei unterschiedliche Richtungen weisen, nämlich in zwei zueinander rechtwinklige Richtungen. Alternativ zu solchen Haken 22 mit in zwei Raumrichtungen offenen Hinterschnitten 34 sind einzelne Haken 22 mit jeweils genau einem in eine Raumrichtung offenen Hinterschnitt 34. Mischformen innerhalb eines Schienenaufnahmeprofils 20, also Haken 22 mit mehreren Hinterschnitten 34 und mehrere Haken 22 mit jeweils einem einzelnen Hinterschnitt 34, sind ebenfalls möglich und gehören damit als optionale Ausführungsformen zur hier vorgeschlagenen Neuerung.

Bei der gezeigten Ausführungsform des Aktuators 10 erlaubt des Schienenaufnahmeprofil 20 in der Frontseite und in der Rückseite eine Anbringung einer Profilschiene 16 in einer horizontalen und in einer vertikalen Ausrichtung, also gewissermaßen in x-Richtung und in γ-Richtung. Das Schienenaufnahmeprofil 20 in jeder Seitenfläche erlaubt eine Anbringung einer Profilschiene 16 in einer dazu senkrechten Ausrichtung, also gewissermaßen in z-Richtung. Damit ist an dem Gehäuse 14 des Aktuators 10 das Anbringen einer Profilschiene 16 in drei verschiedenen Raumrichtungen möglich. Es sind auch gleichzeitig mehrere Profilschienen 16 in unterschiedlichen Raumrichtungen anbringbar. Schließlich sind auch gleichzeitig mehrere Profilschienen 16 in gleichen Raumrichtungen anbringbar.

Bei der gezeigten Ausführungsform und den dortigen Schienenaufnahmeprofilen 20 besteht die Besonderheit darin, dass die als Haken 22 fungierenden Hinterschnitte 34 in den Profilrandelementen 22 einseitig durch die Oberfläche des Aktuatorgehäuses 14 begrenzt sind. Eine Profilschiene 16 in Form einer Hutschiene 16 liegt damit mit deren seitlichen Fahnen 32 an der Oberfläche des Aktuatorgehäuses 14 an, nämlich am Aktuatorgehäuse 14 im Bereich des Schienenaufnahmeprofils 20 (die "Innenseite" des Hutprofils ist der Oberfläche des Aktuatorgehäuses 14 zugewandt). Damit ergibt sich auch, dass das Schienenaufnahmeprofil 20 in der Frontseite (oder in der Rückseite), welches eine Anbringung einer Profilschiene 16 in einer ersten Raumrichtung und alternativ eine Anbringung einer Profilschiene 16 in einer zweiten Raumrichtung erlaubt, ein Schienenaufnahmeprofil 20 zur alternativen Aufnahme einer Profilschiene 16 in zumindest zwei Raumrichtungen und in derselben Ebene ist. Eine horizontal angebrachte Profilschiene 16 ist mit der Oberfläche des Aktuatorgehäuses 14 in Kontakt und genauso ist eine alternativ vertikal angebrachte Profilschiene 16 mit der Oberfläche des Aktuatorgehäuses 14 in Kontakt. Indem jede an dem Schienenaufnahmeprofil 20 anbringbare Profilschiene 16 jeweils mit der Oberfläche des Aktuatorgehäuses 14 in Kontakt ist, ist eine Aufnahme in derselben Ebene gegeben.

Die Darstellung in FIG 6 zeigt eine beispielhafte Anwendungsmöglichkeit der hier vorgeschlagenen Neuerung. In einem Rohr, zum Beispiel einem Lüftungsrohr, befindet sich eine Lüfterklappe 12. Außen am Rohr ist an einer Montagefläche 24 ein Aktuator 10 angebracht. Bei dem Aktuator 10 handelt es sich um einen Aktuator 10 wie in den FIGen 1 bis 5 gezeigt. Am Aktuator 10, nämlich am Aktuatorgehäuse 14 und einem der dortigen Schienenaufnahmeprofile 20, ist eine Hutschiene 16 angebracht. Nur der Aktuator 10 trägt diese Hutschiene 16. Die Hutschiene 16 ragt seitlich über das Aktuatorgehäuse 14 hinaus. Dort sind an der Hutschiene 16 weitere Module 40 angebracht. Als dort angebrachte Module 40 kommen zum Beispiel Module 40 (oder zumindest ein Modul 40) in Betracht, welche den Betrieb des Aktuators 10 bestimmen und/oder überwachen.

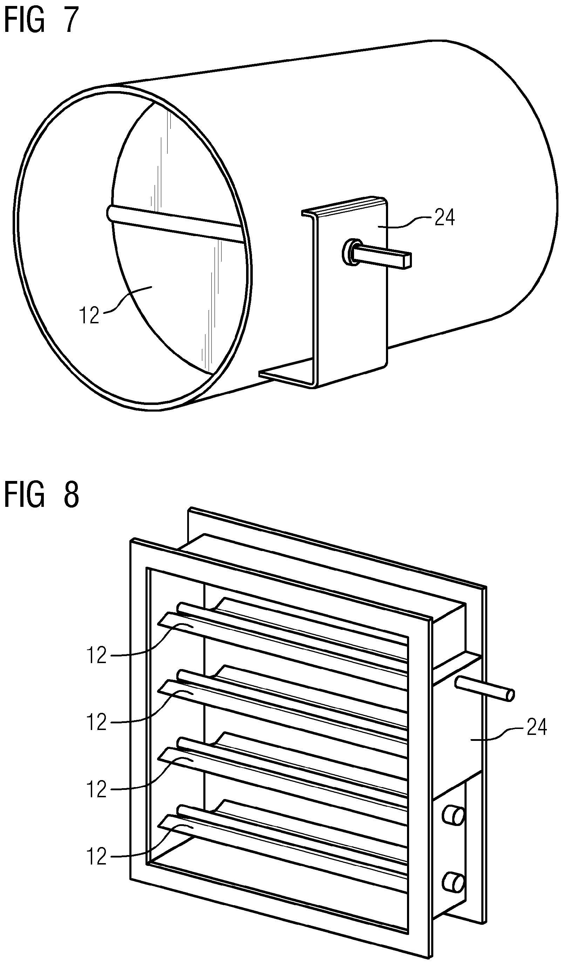

In der Darstellung in FIG 7 ist das Rohr aus FIG 6 mit der dortigen Montagefläche 24 einzeln gezeigt. In der Darstellung in FIG 8 ist ein anderes Lüftungselement mit einer mittels eines Aktuators 10 antreibbaren Lüfterklappe 12 sowie einer Montagefläche 24 zur Anbringung eines Aktuators 10 gezeigt.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Angegeben werden ein Aktuator 10 und eine Verwendung eines Aktuators 10. Der Aktuator 10 umfasst in üblicher Art und Weise ein Gehäuse 14. Das Gehäuse 14 weist zumindest ein als Schienenaufnahmeprofil 20 fungierendes Profil in zumindest einer Oberfläche des Gehäuses 14 auf. Das Schienenaufnahmeprofil 20 ist zur Aufnahme, insbesondere zur formschlüssigen Aufnahme, einer Profilschiene 16 bestimmt. Die hier vorgeschlagene Neuerung ist - in allgemeinen Worten - ein Aktuator 10 mit einer integrierten Schnittstelle zur Aufnahme/Anbringung von Profilschienen 16 und an einer mittels der Schnittstelle mit dem Aktuator 10 kombinierten Profilschiene 16 sind Module 40 für modulare Zusatzfunktionen anbringbar. Als integrierte Schnittstelle fungiert das oder jedes Schienenaufnahmeprofil 20. Als Profilschiene 16 kommt grundsätzlich jede Standard-Montageschiene (DIN-Schiene) in Betracht.

### Bezugszeichenliste

- 10: Aktuator
- 12: Lüfterklappe
- 14: Gehäuse, Aktuatorgehäuse
- 16: Profilschiene, Standardprofilschiene
- 18: (frei)
- 20: Schienenaufnahmeprofil, Profil
- 22: Haken, Profilrandelement
- 24: Montagefläche
- 26: Montageflächengehäuseabschnitt
- 28: (frei)
- 30: Mittelabschnitt (einer Hutschiene)
- 32: (seitliche) Fahne (einer Hutschiene)
- 34: Hinterschnitt
- 36: (frei)
- 38: (frei)
- 40: Modul

## Patentansprüche

1. Aktuator (10) mit einem Gehäuse (14) und
- mit einem zur Anbringung des Aktuators (10) an einer Montagefläche (24) bestimmten Montageflächengehäuseabschnitt (26) sowie
- mit zumindest einem Schienenaufnahmeprofil (20) zur Aufnahme einer Standardprofilschiene (16) in zumindest einer Oberfläche des Gehäuses (14) und unabhängig von dem Montageflächengehäuseabschnitt (26).

2. Aktuator (10) mit einem Gehäuse (14) und mit jeweils einem Schienenaufnahmeprofil (20) zur Aufnahme einer Standardprofilschiene (16) in zumindest zwei Oberflächen des Gehäuses (14) .

3. Aktuator (10) nach Anspruch 1 oder Anspruch 2, mit zumindest einem Schienenaufnahmeprofil (20) zur alternativen Aufnahme einer Standardprofilschiene (16) in einer ersten Raumrichtung oder in einer zweiten Raumrichtung.

4. Aktuator (10) nach Anspruch 3, mit zumindest einem Schienenaufnahmeprofil (20) zur alternativen formschlüssigen Aufnahme einer Standardprofilschiene (16) in zumindest zwei Raumrichtungen in derselben Ebene.

5. Aktuator (10) nach einem der vorangehenden Ansprüche, mit jeweils zumindest einem Schienenaufnahmeprofil (20) zur Aufnahme einer Standardprofilschiene (16) auf mehreren Seitenflächen.

6. Aktuator (10) nach Anspruch 5, mit umlaufend auf aneinander angrenzenden Seitenflächen jeweils zumindest einem Schienenaufnahmeprofil (20) zur Aufnahme einer Standardprofilschiene (16).

7. Aktuator (10) nach einem der vorangehenden Ansprüche, wobei das oder jedes Schienenaufnahmeprofil (20) zumindest zwei einander zugewandte und als Haken (22) fungierende Profilrandelemente aufweist.

8. Aktuator (10) nach Anspruch 7, wobei jeder Haken (22) zumindest einen Hinterschnitt (34) aufweist und wobei innerhalb eines Schienenaufnahmeprofils (20) ein Haken (22) einem anderen Haken (22) zugewandt ist, indem dessen Hinterschnitt (34) in Richtung auf den anderen Haken (22) offen ist.

9. Verwendung eines Aktuators (10) nach einem der vorangehenden Ansprüche als Träger zumindest einer Standardprofilschiene (16) und als Mittel zur Anbringung zumindest eines weiteren Moduls (40) in räumlicher Nähe zu dem Aktuator (10).
